# FASCICULE DE BREVET EUROPEEN

(11) **EP 3 645 306 B1**
(45) Date de publication et mention de la délivrance du brevet: **18.06.2025**
(21) Numéro de dépôt: 18749848.0
(22) Date de dépôt: 29.06.2018
(51) Int. Cl.: B60B 25/08, B60B 25/12, B60B 25/04, B60C 15/02, B60B 21/02, B60B 21/04, B60B 21/10, B60B 25/10, B60B 15/02

(54) **JANTE A CROCHET DE FORME OPTIMISEE**
RADFELGE MIT OPTIMIERTER FELGENHORNFORM
WHEEL RIM WITH OPTIMIZED SHAPE OF RIM FLANGE

(30) Priorité: 30.06.2017 FR 1756176; 08.06.2018 FR 1855036
(43) Date de publication de la demande: 06.05.2020
(73) Titulaire: Maxion Wheels Holding GmbH, 53639 Königswinter (DE)
(72) Inventeur: WALSER, Daniel, 63040 Clermont-Ferrand Cedex 9 (FR); VEDY, Bertrand, 63040 Clermont-Ferrand Cedex 9 (FR)
(74) Mandataire: Patentanwälte Buschhoff Hennicke Althaus
(86) Numéro de dépôt international: PCT/FR2018/051612
(87) Numéro de publication internationale: WO 2019/002793

(56) Documents cités:
- EP-A1- 0 125 047
- EP-A1- 0 783 981
- WO-A1-2018/007751
- WO-A1-2018/007751
- WO-A1-2019/002792
- WO-A1-2019/002794
- WO-A1-2019/234370
- US-A- 4 274 466

## Description

### Domaine de l'invention

L'invention a pour objet une jante ainsi qu'un ensemble roulant constitué par un pneumatique, une jante rigide et une liaison entre pneumatique et jante par extenseur flexible. Un pneumatique comprend, comme on le sait, deux bourrelets destinés à être montés sur des sièges. La présente invention concerne les ensembles roulants dans lesquels un bourrelet de pneumatique n'est pas monté directement sur une jante, rigide, mais est monté sur un extenseur flexible, lequel est monté sur jante.

Un pneumatique, une jante, ainsi qu'un extenseur dont il est question dans la présente invention sont usuellement décrits par une représentation dans un plan méridien, c'est-à-dire un plan contenant l'axe de rotation du pneumatique. Tous ces produits (un pneumatique, une jante, un extenseur) sont des objets ayant une géométrie de révolution par rapport à leur axe de rotation. Les directions radiale et axiale désignent respectivement les directions, la première, perpendiculaire à l'axe de rotation du pneumatique, et la seconde, parallèle à l'axe de rotation du pneumatique. Dans ce qui suit, les expressions « radialement », et « axialement » signifient respectivement « selon une direction radiale », et « selon la direction axiale ». Les expressions « radialement intérieur, respectivement radialement extérieur » signifient « plus proche, respectivement plus éloigné, de l'axe de rotation du pneumatique, selon une direction radiale ». Un plan médian est un plan perpendiculaire à l'axe de rotation du pneumatique, positionné axialement de façon à couper la surface de la bande de roulement sensiblement à mi-distance des bourrelets d'un pneumatique. Les expressions « axialement intérieur, respectivement axialement extérieur » signifient « plus proche, respectivement plus éloigné, du plan médian du pneumatique, selon la direction axiale ». Les expressions « radialement intérieur, respectivement radialement extérieur » signifient « plus proche, respectivement plus éloigné, de l'axe de rotation, selon la direction radiale ». Enfin, rappelons encore que, par « coupe radiale » ou « section radiale », on entend une coupe ou une section selon un plan qui contient l'axe de rotation de la jante (et du pneumatique dont celle-ci est équipée).

### État de la technique

Le document US 4,274,466 présente un ensemble pneumatique et roue comportant une gorge circonférentielle sur le siège de la jante coopérant avec une pointe de gomme de l'extrémité du bourrelet du pneumatique pour bloquer en position le bourrelet sur la jante.

Dans le document WO2016/046197, il est proposé d'insérer un extenseur flexible entre un bourrelet de pneumatique et une jante. Le lecteur se reportera par exemple à la figure 5 de ce document pour prendre connaissance d'un ensemble roulant appartenant au domaine de l'invention. On y voit un ensemble roulant comprenant un pneumatique, une jante et deux extenseurs identiques. En considérant les conventions de langage rappelées ci-dessus, et en se reportant à la façon dont on monte sur une jante un tel extenseur, un tel extenseur comprend, axialement de l'intérieur vers l'extérieur, une extrémité axialement intérieure appelée bourrelet d'extenseur et destinée à assurer l'accrochage de l'extenseur sur la jante. Un tel extenseur comprend aussi une extrémité axialement extérieure destinée à recevoir et immobiliser axialement un bourrelet de pneumatique. Un corps relie les deux extrémités respectivement axialement intérieure et axialement extérieure.

WO 2018/007751 divulgue un assemblage de roue avec une jante, un pneu et un prolongateur monté entre le rebord de la jante de la roue et le pneu. Le rebord de la jante a un axe de rotation et une surface d'appui radialement extérieure pour la rallonge, de sorte qu'une première partie du rebord de la jante comprend une deuxième partie. La seconde partie est orientée de manière à ce q'un enjoliveur déformable puisse être monté sur la roue de telle sorte que la périphérie extérieure de l'enjoliveur présente un jeu fonctionnel par rapport à la face intérieure radiale de l'extenseur, tout en fournissant un support radial de l'extenseur en cas de contrainte radiale élevée sur la roue.

Les extenseurs sont montés sur une jante qui est la plupart du temps une pièce en aluminium. La jante présente de chaque côté un crochet de jante destiné à assurer en particulier l'immobilisation axialement de l'extenseur. Une autre fonction de ce crochet de jante est d'imposer à l'extenseur une déformation de manière à former un bossage (habituellement connu pour les jantes sous la dénomination « hump ») que le pneumatique franchit au gonflage (comme pour un ensemble pneu et jante classique, sans extenseur). Ce bossage contribue à empêcher ou retarder le décoincement du pneumatique en cas d'utilisation à une pression de gonflage anormalement basse (or on sait que, en cas de décoincement, la capacité de guidage du pneumatique est très largement amoindrie et même disparait si le pneumatique quitte la jante, ce qui devient très probable).

La hauteur radiale de ce crochet de jante, pour les ensembles roulants avec extenseur, avait été choisie lors des travaux exploratoires en adoptant un crochet de type « B » tel que décrit par l'ETRTO (hauteur 14.1 mm + ou - 0.6), alors que, le plus fréquemment, les crochets pour roues de véhicules de tourisme sont de type « J » (hauteur 17.3 mm + ou - 0.6). Un tel crochet B, que l'on qualifie dans le présent mémoire de crochet haut, a certes l'avantage de contribuer à de bonnes valeurs de décoincement des ensembles pneumatiques/jantes usuels (sous faible pression), mais dans le contexte d'un montage avec extenseurs, il pose aussi des problèmes.

D'une part, le hump est suffisamment grand pour conduire à des valeurs de pression de gonflage trop grandes pour la simple mise en place du pneumatique monté sur jante avec extenseurs. D'autre part, ce crochet impose à l'extenseur une grande déformation à l'endroit où celui-ci le surplombe radialement. En effet, la forme naturelle de l'extenseur en sortie de moule, à l'état libre de toute contrainte, est sensiblement cylindrique (en fait très légèrement conique), de diamètre bien inférieur au diamètre mesuré au sommet du crochet métallique. La mise en place de l'extenseur impose donc une grande déformation locale radiale à l'extenseur. Comme à cet endroit les renforts au sein de l'extenseur sont en général de type « carcasse croisée », l'extenseur oppose à cette déformation une grande résistance. Il s'ensuit une grande pression entre l'extenseur et le crochet métallique à l'endroit du bossage comparable à un hump de jante classique.

En raison de la bonne adhérence entre le caoutchouc et l'aluminium, on comprend bien qu'une certaine partie de l'effort axial généré par le pneu sous pression et tendant à étirer axialement l'extenseur est pour partie reprise au niveau de cette interface, alors qu'on préférerait, pour assurer un montage isostatique de l'extenseur, que tout cet effort soit repris par l'appui sur le crochet métallique du talon de l'extenseur. En l'état, le fait que le positionnement de l'extenseur ne soit pas clairement défini puisque non forcément identiquement en place tout au long de son périmètre conduit à des irrégularités géométriques, elles-mêmes responsables de vibrations au roulage pour raison de non-uniformités.

Les observations du déposant l'ont ainsi amené à s'écarter des règles de construction usuelles des jantes.

### Description brève de l'invention

Cet objectif a été atteint, de manière surprenante, en s'écartant des enseignements antérieurs quant à la conception de la jante, et plus particulièrement de son rebord.

L'invention a donc pour objet une jante pour pneumatique, la jante ayant un axe de rotation DD', ladite jante comportant un siège sur jante prolongé axialement vers l'extérieur par un rebord de jante, ledit rebord de jante comportant une face d'appui radialement extérieure avec une première portion orientée sensiblement dans un plan perpendiculaire et située radialement à l'extérieur par rapport audit siège sur jante, une seconde portion inclinée vers l'extérieur, située axialement à l'extérieur par rapport à ladite première portion et située au moins en partie radialement à l'extérieur par rapport audit siège sur jante et une portion de raccordement entre ladite première portion et ladite seconde portion. Cette jante est caractérisée en ce que ladite seconde portion de ladite face d'appui est sensiblement tronconique, le sommet virtuel déterminé en prolongeant ladite portion sensiblement tronconique étant situé axialement vers l'extérieur par rapport audit siège sur jante.

En fait, l'invention propose une jante dont le rebord, de largeur importante, a une forme conçue pour offrir à la face radialement intérieure de l'extenseur une face d'appui ou support de forme appropriée pour que ledit extenseur, dans l'ensemble pneumatique gonflé à pression nominale, se déforme et adopte une forme favorisant un bon fonctionnement.

Avantageusement, ladite seconde portion sensiblement tronconique forme avec l'axe de rotation DD' un angle α de valeur comprise entre 5° et 30°. De préférence, la largeur axiale cumulée de la seconde portion et la portion de raccordement est comprise entre 15 mm et 21,5 mm.

Selon l'état de la technique, les extenseurs montés sur une jante métallique forment en fait l'assise du pneu, quant à sa capacité à absorber radialement les chocs. Ils apportent plus de flexibilité radiale à l'ensemble roulant. Alors que l'on pensait ne pas pouvoir apporter une amélioration significative à cette capacité d'absorber les chocs si le bourrelet du pneumatique n'est pas axialement totalement à l'extérieur de la jante, on s'est aperçu qu'il est possible de maintenir une certaine flexibilité radiale combinée tout à la fois à une excellente endurance de l'extenseur et une amélioration des performances en tenue de route (dont on sait qu'elles sont d'autant meilleures que le pneumatique est capable de développer des poussées de dérives importantes favorables au guidage transversal rigoureux du véhicule) en organisant un basculement du bourrelet du pneumatique tout autant qu'un déplacement radialement vers l'axe de rotation de l'ensemble roulant. L'extension sous le bourrelet du pneumatique de la face d'appui radialement extérieure du rebord de jante permet effectivement une amélioration des performances de tenue de route de l'ensemble roulant relativement à des géométries d'ensemble roulant présentées par exemple dans le document cité WO2016/046197.

L'invention apporte une nouvelle fonction à la jante, à savoir, de par la portée rigide présente radialement sous la pointe du bourrelet du pneu, épousant sensiblement la forme de l'extenseur, offrir un support rigide qui impose au pneu d'amorcer un mouvement de basculement qui ne contrarie pas un déplacement radial suffisant du bourrelet lorsque l'on considère la partie de celui-ci axialement la plus à l'extérieur.

Les observations montrent que la performance en endurance face aux chocs orientés radialement est comparable, voire meilleure, à ce qui est obtenu en appliquant les enseignements de l'état de la technique. De préférence, l'ensemble roulant comporte deux extenseurs qui assurent la jonction entre la jante de montage et les deux bourrelets du pneumatique.

Chaque extenseur est flexible ; on entend par là qu'il est déformable élastiquement en permettant, vu en coupe méridienne, une flexion et un déplacement radial sans quitter le domaine élastique, aux sollicitations de service, lors de l'usage du pneumatique gonflé à pression nominale ;. A noter que la déformation axiale de l'extenseur n'est pas souhaitable en fonctionnement normal du pneumatique gonflé à pression nominale.

La jante est de préférence constituée en un matériau choisi parmi l'acier ou les alliages d'aluminium et/ou de magnésium, les matériaux composites à base de fibres de carbone, de fibres de verre, de fibres d'aramide, de fibres végétales, lesdites fibres étant comprises dans une matrice à base de composés thermodurcissables ou de composés thermoplastiques, ou en un composé complexe comprenant un élastomère et un complexe à base de résine et de fibres choisies parmi les fibres de carbone, les fibres de verre, les fibres d'aramide, les fibres végétales ou parmi toutes combinaisons de matériaux.

En ce qui concerne d'autres aspects de la jante en soi ou de l'extenseur en soi, le lecteur est renvoyé aux documents WO2015/086662 et WO2016/046197 précités.

### Description des Figures

L'invention est décrite ci-après à l'aide des figures 1 à 7, données uniquement à titre d'illustration :
- la figure 1 est une coupe méridienne d'un ensemble roulant avec une jante selon l'invention,
- la figure 2 est un agrandissement de la partie gauche de l'ensemble,
- la figure 3 est une coupe méridienne, partielle, d'une jante selon l'invention,
- les figures 4 et 5 présentent un test de résistance à un choc trottoir, respectivement en vue de côté et en vue de dessus,
- la figure 6 présente des résultats de performance d'ensembles roulants selon l'invention au test de choc trottoir, et
- la figure 7 est une coupe méridienne, partielle, d'un autre mode de réalisation d'une jante selon l'invention.

### Description détaillée de l'invention

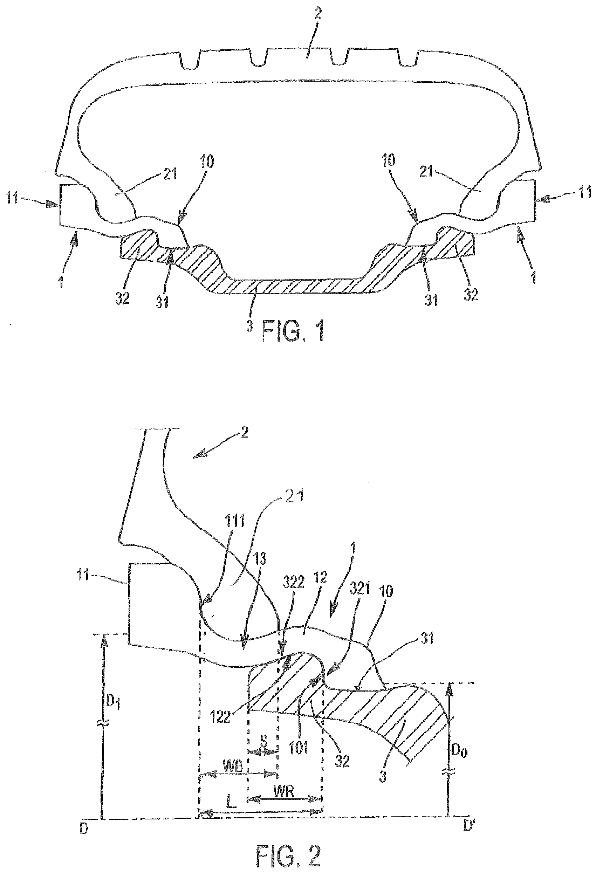

La figure 1 montre un ensemble roulant avec une jante selon l'invention. Cet ensemble comprend deux extenseurs 1 identiques, un pneumatique 2 et une jante 3. Le pneumatique 2 comporte deux bourrelets 21. De façon générale, signalons que le choix de largeur de jante est tel que, compte tenu de la largeur L des extenseurs (voir figure 2), le pneumatique se trouve dans une configuration aussi semblable que possible à la configuration qu'il aurait s'il était monté directement, sans extenseurs, sur une jante appropriée.

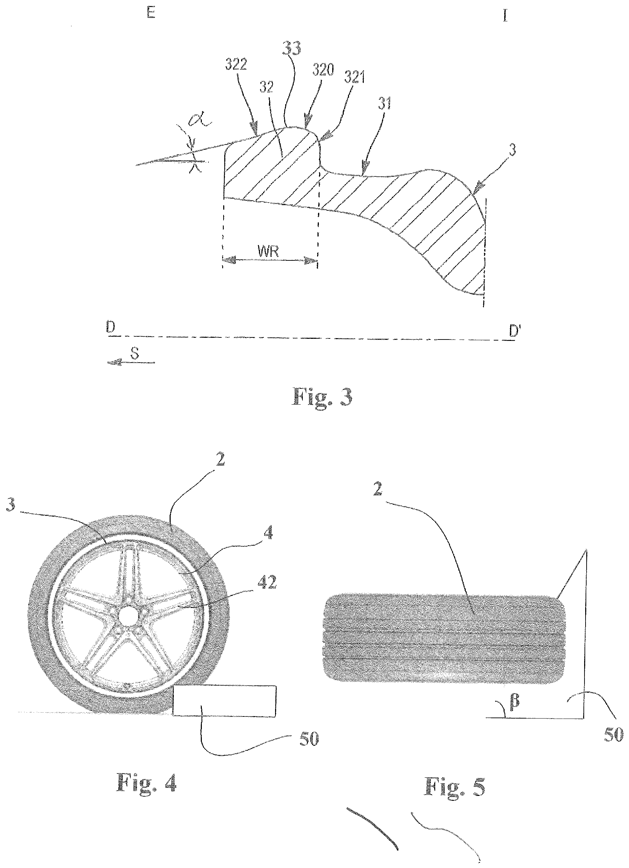

En consultant plus particulièrement la figure 3, on voit que la jante 3 comporte deux sièges sur jante 31, chacun prolongé par un rebord 32 de jante. Le rebord 32 de jante comporte une face d'appui 33 radialement extérieure destinée à servir de support au corps de l'extenseur. La face d'appui 33 du rebord de jante 32 est en contact avec l'extenseur 1 lorsque le pneumatique est monté sur les extenseurs et que ceux-ci sont montés sur la jante, le pneumatique étant gonflé à la pression nominale. Cette face d'appui 33 comporte une première portion 321 orientée sensiblement dans un plan perpendiculaire à l'axe de rotation DD' de l'ensemble roulant, et située radialement à l'extérieur par rapport audit siège sur jante 31. La face d'appui 33 du rebord 32 de jante comporte une seconde portion 322 sensiblement tronconique, située axialement à l'extérieur par rapport à ladite première portion 321 et située au moins en partie radialement à l'extérieur par rapport audit siège sur jante 31, ladite seconde portion 322 est sensiblement tronconique, d'angle α valant 15°. La face d'appui 33 comprend aussi une portion de raccordement 320 entre ladite première portion 321 et ladite seconde portion 322. Dans l'exemple représenté, la largeur axiale WR du rebord de jante 32 est de 18,3 mm.

Les repères E et I à la figure 3 indiquent le côté axialement extérieur de la jante, respectivement le côté axialement intérieur. La seconde portion 322 est inclinée axialement vers l'extérieur : ainsi, en la prolongeant axialement vers l'extérieur, on rejoint l'axe DD' (position non à l'échelle par rapport à la jante 3) en un sommet virtuel S rejeté axialement très loin vers l'extérieur, ce qui est symbolisé par une flèche sous S à la figure 3.

L'invention peut être utilisée avec de nombreuses variantes de constitution interne du pneumatique 2, qui ne sont donc pas représentées, ainsi qu'avec de nombreuses variantes de constitution interne d'extenseur 1, qui ne sont donc pas représentées.

En revenant à la figure 2, on voit que chaque extenseur 1 comporte une extrémité axialement intérieure 10 destinée à être montée sur l'un desdits sièges sur jante 31. Il comporte une extrémité axialement extérieure 11 ainsi qu'un corps 12 orienté sensiblement axialement et disposé entre ladite extrémité axialement extérieure 11 et ladite extrémité axialement intérieure 10. Le corps 12 a une face radialement intérieure 122. L'extrémité axialement intérieure 10 de l'extenseur a une face de positionnement axial 101 sensiblement perpendiculaire à l'axe de rotation DD', et est immobilisée en étant plaquée axialement contre le rebord 32 de jante, sous l'effet de la pression de gonflage de l'ensemble roulant. L'extrémité axialement extérieure 11 présente un épaulement 111 formant en partie une face sensiblement perpendiculaire à l'axe de rotation DD'. Ledit extenseur 1 comporte un siège sur extenseur 13. Le bourrelet 21 a une largeur axiale WB à l'interface du bourrelet 21 avec le siège sur extenseur 13. Le bourrelet 21 est immobilisé en étant plaqué axialement contre ladite extrémité axialement extérieure 11 de l'extenseur, sous l'effet de la pression de gonflage de l'ensemble roulant.

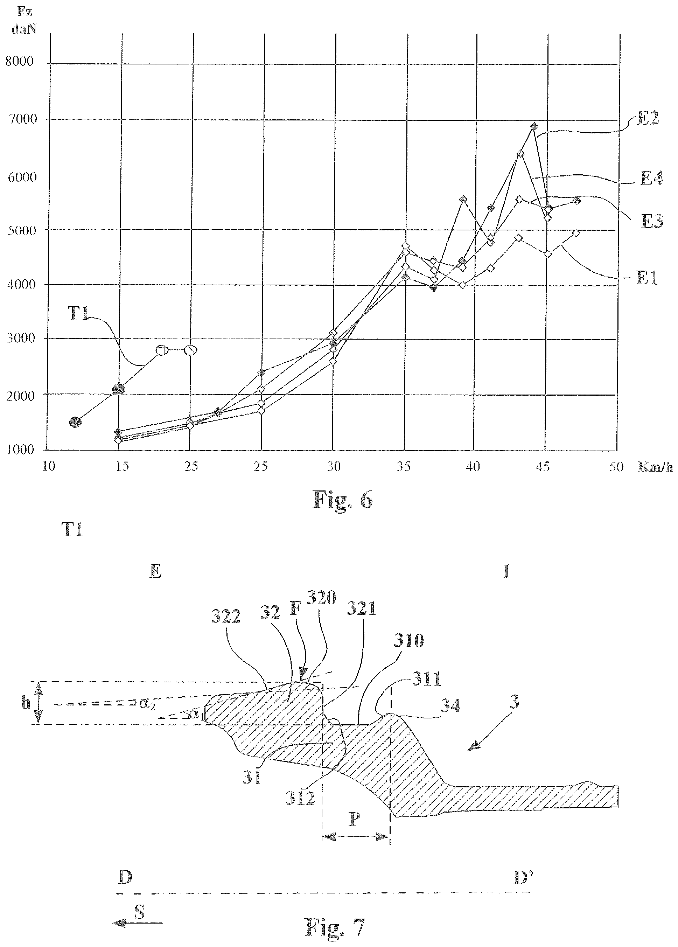

En prolongeant la trace de l'épaulement 111 de l'extrémité axialement extérieure 11 radialement vers l'intérieur et en prolongeant la trace du siège sur extenseur 13, on obtient un point qui est la trace d'un cercle de diamètre D₁, diamètre qui lui-même correspond au diamètre normalisé du pneumatique de l'ensemble roulant utilisant l'extenseur 1 selon l'invention. En prolongeant la trace de la face de positionnement axial 101 radialement vers l'intérieur et en prolongeant la trace du siège sur jante 31, on obtient un point qui est la trace d'un cercle de diamètre D₀ qui est le diamètre normalisé du siège sur jante 31. Pour une information sur les normes auquel il est fait référence, le lecteur consultera la documentation de l'ETRTO (European Tyre and Rim Technical Organisation). La hauteur h du rebord de jante mesurée entre le point d'intersection entre la trace du siège de jante 310 et la trace de la portion radiale 321 du rebord 32 et le point F radialement le plus extérieur du rebord 32 est de 8,5 mm (voir figure 7). Cela permet d'obtenir un bossage de l'extenseur approprié au maintien du bourrelet du pneumatique sur le siège sur extenseur sans entraîner de contraintes trop élevées dans la structure de l'extenseur.

Une fois le montage effectué, le bourrelet du pneumatique impose une contraction circonférentielle de l'extenseur 1. Le rebord 32 de jante s'étend axialement sous le bourrelet 21 sur une distance S telle que le rapport S/WB est égal à 0,3. Ainsi, on voit que la face radialement intérieure 122 s'appuie sur la face d'appui radialement extérieure 33 du rebord de jante 32 sur toute sa largeur axiale WR, laquelle vaut 18,3 mm et est bien plus importante que dans les réalisations connues, ce qui contraint le bourrelet 21 du pneumatique à basculer dans un mouvement de rotation (dans le sens trigonométrique pour le côté du pneumatique 2 représenté à la figure 2) lorsqu'il subit une augmentation de charge radiale significative.

La figure 7 présente en coupe méridienne partielle un mode de réalisation alternatif d'une jante selon l'un des objets de l'invention. Les références identiques correspondent à des parties identiques ou similaires.

Cette jante 3 se différencie de celle illustrée à la figure 3 par un siège de jante 310 sensiblement cylindrique entre deux zones de transition 311 et 312 et une largeur axiale P fortement réduite, de l'ordre de 15,3 mm. Ces deux modifications permettent de bloquer en position de service le bourrelet d'extenseur de l'extenseur 1 dès son montage sur la jante sans devoir compter sur la pression de gonflage de l'ensemble roulant au moment du montage du pneumatique sur l'ensemble jante et extenseur.

La résistance aux chocs trottoir a été quantifiée en faisant passer les ensembles roulants sur un trottoir 50 de 90 mm de haut avec un angle β de 60° par rapport à la direction d'avancement du pneumatique (un angle de 90° correspondant à une direction perpendiculaire à la direction d'avancement du pneumatique, voir figures 4 et 5) ; le bord du trottoir a un rayon de courbure de 10 mm ; on effectue des passages successifs à des vitesses différentes jusqu'à ce que le pneumatique perde sa pression de gonflage ou jusqu'à ce que le pneumatique ou l'extenseur ou la roue se déforme de façon permanente et on fait l'acquisition pour chaque passage des efforts transmis au trottoir et/ou au moyeu sur le véhicule. On compare un ensemble de référence à un ensemble selon l'invention. L'ensemble de référence T1 est un ensemble classique sans extenseur comportant un pneumatique 245/35 R 20 de type MICHELIN ^{®} PS4S, et une jante de largeur valant 8 pouces, le rebord étant celui du crochet J. Comme le montre la figure 4, les roues 4 des ensembles roulants testés sont des roues à rayons 42.

Quatre ensembles roulants comportant des extenseurs ont été testés avec des valeurs du rapport S/WB variables :
- Le premier E1, avec une jante telle que présentée à la figure 3 a un rapport S/WB égal à 0,27 ;
- Le deuxième E2 avec une jante telle que présentée à la figure 7 a un rapport S/WB égal à 0,27 ;
- Le troisième E3 avec une jante telle que présentée à la figure 7 a un rapport S/WB égal à 0,49 ; et
- Le quatrième E4 avec une jante telle que présentée à la figure 7 a un rapport S/WB égal à 0,70.

Les résultats des essais de choc trottoir sont présentés à la figure 6.

Le graphe de la figure 6 présente en abscisses la vitesse d'avancement du pneumatique en km/h et en ordonnées la valeur maximale de l'effort radial mesuré au sol lors du choc exprimé en daN.

L'ensemble roulant témoin T1 sans extenseurs présente une soufflure du flanc dès l'essai à 18 km/h et une crevaison dès 20 km/h.

Pour les quatre ensembles roulants comportant des extenseurs, dans toute la gamme de vitesses testées, aucun pneumatique n'a présenté de dommage bien que les valeurs maximales des efforts radiaux augmentent très sensiblement avec la vitesse.

Il est à noter que les valeurs maximales des efforts radiaux sont notablement différentes en fonction de l'endroit du choc sur la roue. Fz est plus élevée si le choc se porte sur un rayon de la roue relativement à un choc entre deux rayons.

En conséquence, il n'est pas possible de différencier les résultats pour ces quatre ensembles, on note cependant que l'augmentation du rapport S/WB ne diminue pas la résistance de l'ensemble roulant aux chocs trottoir même si une augmentation des efforts radiaux semble se dessiner avec l'augmentation de la valeur du rapport S/WB.

Pour l'ensemble roulant E1, on a noté une déformation permanente de la roue à l'endroit du choc dès 42 km/h. La meilleure résistance des trois autres ensembles roulants selon l'invention peut être liée à la modification de la géométrie du rebord de jante ainsi qu'à l'extension vers l'extérieur du rebord de jante.

En revanche, lors d'essais de comportement on a noté une amélioration sensible de la précision de conduite avec l'augmentation du rapport S/WB.

## Revendications

1. Jante (3) pour pneumatique monté sur la jante moyennant un extenseur flexible, la jante (3) ayant un axe de rotation (DD'), ladite jante comportant un siège sur jante (31) prolongé axialement vers l'extérieur par un rebord (32) de jante, ledit rebord (32) de jante comportant une face d'appui (33) radialement extérieure avec une première portion (321) orientée sensiblement dans un plan perpendiculaire et située radialement à l'extérieur par rapport audit siège sur jante (31), dans laquelle, une seconde portion (322) inclinée vers l'extérieur, située axialement à l'extérieur par rapport à ladite première portion (321) et située au moins en partie radialement à l'extérieur par rapport audit siège sur jante (31) et une portion de raccordement (320) entre ladite première portion (321) et ladite seconde portion (322), **caractérisée en ce que** ladite seconde portion (322) est sensiblement tronconique et forme avec l'axe de rotation (DD') un angle (α) de valeur, le sommet virtuel déterminé en prolongeant ladite portion sensiblement tronconique on rejoint l'axe de rotation (DD') étant situé axialement vers l'extérieur par rapport audit siège sur jante (31) pour offrir sur toute largeur axiale (WR) de ladit rebord (32) une face d'appui ou support à une face radialement intèriere de l'extenseur.

2. Jante selon la revendication 1, **caractérisée en ce que** l'angle (α) de valeur est comprise entre 5° et 30°.

3. Jante selon l'une des revendications 1 ou 2, dans laquelle ladite seconde portion (322) et ladite portion de raccordement (320) présentent une largeur axiale cumulée (WR) comprise entre 15 mm et 21,5 mm.

4. Ensemble roulant constitué par un pneumatique, une jante (3) rigide pour le pneumatique et un extenseur flexible monté sur la jante (3) entre le pneumatique et la jante, **caractérisée en ce que** la jante (3) est réalisée selon l'une des revendications 1 à 3.

5. Ensemble selon la revendication 4, **caractérisée en ce que** cet ensemble comprend deux extenseurs (1), chaque extenseur (1) comporte une extrémité axialement intérieure (10) destinée à être montée sur l'un desdits sièges sur jante (31), et une extrémité axialement extérieure (11) ainsi qu'un corps (12) orienté sensiblement axialement et disposé entre ladite extrémité axialement extérieure (11) et ladite extrémité axialement intérieure (10), le corps (12) a une face radialement intérieure (122), l'extrémité axialement intérieure (10) de l'extenseur a une face de positionnement axial (101) sensiblement perpendiculaire à l'axe de rotation (DD'), et est immobilisée en étant plaquée axialement contre le rebord (32) de jante, sous l'effet de la pression de gonflage de l'ensemble roulant, et l'extrémité axialement extérieure (11) présente un épaulement (111) formant en partie une face sensiblement perpendiculaire à l'axe de rotation (DD'), et ledit extenseur (1) comporte un siège sur extenseur (13), et le bourrelet (21) a une largeur axiale (WB) à l'interface du bourrelet (21) avec le siège sur extenseur (13), et le bourrelet (21) est immobilisé en étant plaqué axialement contre ladite extrémité axialement extérieure (11) de l'extenseur, sous l'effet de la pression de gonflage de l'ensemble roulant.

6. Ensemble selon la revendication 5, **caractérisée en ce que** le rebord (32) de la jante a une largeur axiale (WR), dans lequel la largeur axiale (WB) du bourrelet (21) et la largeur axiale du rebord (32) de la jante se chevauchent l'une l'autre, la largeur axiale du bourrelet et la largeur axiale du rebord de la jante se chevauchent, et que chacun des extenseurs flexibles définit une largeur et que la largeur axiale du rebord de la jante et la largeur axiale du bourrelet se situent dans la largeur de chacun des extenseurs flexibles.

## Patentansprüche

1. Felge (3) für einen Reifen, der mittels eines flexiblen Adapters auf der Felge montiert ist, wobei die Felge (3) eine Drehachse (DD') hat, wobei die Felge einen Felgensitz (31) aufweist, der axial nach außen durch ein Felgenhorn (32) verlängert ist, wobei das Felgenhorn (32) eine radial äußere Auflagefläche (33) aufweist mit einem ersten Abschnitt (321), der im Wesentlichen in einer senkrechten Ebene ausgerichtet ist und radial außerhalb des Felgensitzes (31) angeordnet ist, mit einem zweiten nach außen geneigter Abschnitt (322), der axial außerhalb des ersten Abschnitts (321) und zumindest teilweise radial außerhalb des Felgensitzes (31) angeordnet ist, und mit einen Verbindungsabschnitt (320) zwischen dem ersten Abschnitt (321) und dem zweiten Abschnitt (322), **dadurch gekennzeichnet, dass** der zweite Abschnitt (322) im Wesentlichen kegelstumpfförmig ist und mit der Drehachse (DD') einen Winkel (α) bildet, wobei der virtuelle Scheitelpunkt, der durch Verlängerung des im Wesentlichen kegelstumpfförmigen Abschnitts am Auftreffen auf die Drehachse (DD') bestimmt wird, axial außerhalb des Felgensitz (31) liegt, um eine Auflagefläche oder Stütze für eine radial innere Fläche des Adapters über die gesamte axiale Breite (WR) des Flansches (32) bereitzustellen.

2. Felge nach Anspruch 1, **dadurch gekennzeichnet, dass** der Winkel (α) einen Wert zwischen 5° und 30° aufweist.

3. Felge nach einem der Ansprüche 1 oder 2, wobei der zweite Abschnitt (322) und der Verbindungsabschnitt (320) eine kumulierte axiale Breite (WR) zwischen 15 mm und 21,5 mm aufweisen.

4. Rollende Anordnung, bestehend aus einem Reifen, einer steifen Felge (3) für den Reifen und einem flexiblen Adapter, der auf der Felge (3) zwischen dem Reifen und der Felge auf der Felge (3) montiert ist, **dadurch gekennzeichnet, dass** die Felge (3) gemäß einem der Ansprüche 1 bis 3 ausgebildet ist

5. Anordnung nach Anspruch 4, **dadurch gekennzeichnet, dass** die Anordnung zwei Adapter (1) aufweist, wobei jeder Adapter (1) ein axial inneres Ende (10) zur Montage an einem der Felgensitze (31) und ein axial äußeres Ende (11) sowie einen im Wesentlichen axial ausgerichteten Körper (12) aufweist, der zwischen dem axial äußeren Ende (11) und dem axial inneren Ende (10) angeordnet ist, wobei der Körper (12) eine radial innere Fläche (122) aufweist, wobei das axial innere Ende (10) des Adapters eine axial ausgerichtete Fläche (101) aufweist, die im Wesentlichen senkrecht zur Drehachse (DD') verläuft, und axial gegen das Felgenhorn (32) gedrückt und fixiert ist, unter der Wirkung des Reifendruckes der Rolleneinheit, und das axial äußere Ende (11) weist eine Schulter (111) auf, die teilweise eine zur Drehachse (DD') im Wesentlichen senkrechte Fläche bildet, und der Adapter (1) weist einen Adaptersitz (13) aufweist, und der Wulst (21) weist eine axiale Breite (WB) an der Schnittstelle des Wulstes (21) mit dem Adaptersitz (13) auf, und der Wulst (21) ist dadurch fixiert ist, dass er unter der Wirkung des Reifendrucks des Reifens der Anordnung axial gegen das axial äußere Ende (11) des Adapters gedrückt wird.

6. Anordnung nach Anspruch 5, **dadurch gekennzeichnet, dass** das Felgenhorn (32) eine axiale Breite (WR) aufweist, innerhalb der sich die axiale Breite (WB) des Wulstes (21) und die axiale Breite des Felgenhorns (32) einander überlappen, wobei sich die axiale Breite des Wulstes und die axiale Breite des Felgenhorns überlappen, und dass jede der flexiblen Adapter eine Breite definiert und dass die axiale Breite des Felgenhorns und die axiale Breite des Wulstes innerhalb der Breite jedes der flexiblen Adapter liegen.

## Claims

1. Rim (3) for a tire mounted on the rim by means of a flexible expander, the rim (3) having an axis of rotation (DD'), said rim comprising a rim seat (31) axially extended outwardly by a rim flange (32), said rim flange (32) comprising a radially outer supporting face (33) with a first portion (321) oriented substantially in a perpendicular plane and located radially on the outside with respect to said seat on rim (31), in which a second outwardly inclined portion (322) is located axially on the outside with respect to said first portion (321) and located at least partially radially on the outside relative to said rim seat (31) and a connecting portion (320) between said first portion (321) and said second portion (322), **characterized in that** said second portion (322) is substantially frustoconical and forms with the axis of rotation (DD') an angle (α) of value, the virtual apex determined by extending the said substantially frustoconical portion meets the axis of rotation (DD') which is situated axially towards the outside in relation to the said rim seat (31) in order to provide a bearing surface or support for a radially inner surface of the expander over the entire axial width (WR) of the said flange (32).

2. Rim according to claim 1, **characterized in that** the angle (α) has a value of between 5° and 30°.

3. Rim according to one of claims 1 or 2, in which said second portion (322) and said connecting portion (320) have a combined axial width (WR) of between 15 mm and 21.5 mm.

4. A wheeled assembly consisting of a tire, a rigid rim (3) for the tire and a flexible expander mounted on the rim (3) between the tire and the rim, **characterized in that** the rim (3) is made according to one of claims 1 to 3.

5. An assembly according to claim 4, **characterized in that** this assembly comprises two expanders (1), each expander (1) having an axially inner end (10) intended to be mounted on one of the said rim seats (31), and an axially outer end (11) as well as a substantially axially oriented body (12) disposed between said axially outer end (11) and said axially inner end (10), the body (12) having a radially inner face (122), the axially inner end (10) of the expander has an axial positioning face (101) substantially perpendicular to the axis of rotation (DD'), and is immobilized by being axially pressed against the rim flange (32) under the effect of the inflation pressure of the rolling assembly, and the axially outer end (11) has a shoulder (111) forming in part a face substantially perpendicular to the axis of rotation (DD'), and said expander (1) includes an expander seat (13), and the bead (21) has an axial width (WB) at the interface of the bead (21) with the seat on the expander (13), and the bead (21) is immobilized by being axially pressed against said axially outer end (11) of the expander, under the effect of the inflation pressure of the rolling assembly.

6. Assembly according to claim 5, **characterized in that** the rim flange (32) has an axial width (WR), in which the axial width (WB) of the bead (21) and the axial width of the rim flange (32) overlap each other, the axial width of the bead and the axial width of the rim flange overlap, and each of the flexible expanders defines a width and the axial width of the rim flange and the axial width of the bead are within the width of each of the flexible expanders.
